Europäisches Patentamt

**European Patent Office**

**Office européen des brevets**

(19)

(11) Numéro de publication : **0 072 306**
**B1**

(12)                    **FASCICULE DE BREVET EUROPÉEN**

(45) Date de publication du fascicule du brevet :
24.04.85

(51) Int. Cl.⁴ : **C 04 B 35/52, C 22 C 1/10, B 22 F 3/10, H 01 H 1/02**

(21) Numéro de dépôt : **82401443.5**

(22) Date de dépôt : **30.07.82**

(54) **Procédé de préparation d'un matériau composite comportant une matrice inorganique dans laquelle sont reparties des inclusions de carbone vitreux, matériau obtenu par ce procédé et son utilisation comme contact électrique.**

(30) Priorité : 06.08.81 FR 8115275

(43) Date de publication de la demande :
16.02.83 Bulletin 83/07

(45) Mention de la délivrance du brevet :
24.04.85 Bulletin 85/17

(84) Etats contractants désignés :
BE CH DE GB IT LI NL

(56) Documents cités :
DE-A- 2 718 308
FR-A- 2 054 664
FR-A- 2 115 254
FR-A- 2 285 687
US-A- 4 110 515

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Devillard, Jacques**
**474, Chemin du Rosat**
**F-38330 Saint Ismier (FR)**
Inventeur : **Granier, Jean**
**57, rue de l'Industrie**
**F-38170 Seyssinet (FR)**

(74) Mandataire : **Mongrédien, André et al**
**c/o BREVATOME 25, rue de Ponthieu**
**F-75008 Paris (FR)**

EP 0 072 306 B1

Jouve, 18, rue St-Denis, 75001 Paris, France

# 0 072 306

**Description**

La présente invention se rapporte à des matériaux composites comportant une matrice inorganique dans laquelle sont réparties des inclusions de matériau carboné, constituées par des inclusions de carbone vitreux et/ou de graphite et/ou de carbures.

De tels matériaux composites peuvent être utilisés dans de nombreux domaines, en particulier dans l'industrie électrotechnique et mécanique en tant que matériaux de contact électrique et/ou matériaux de frottement.

De façon plus précise, l'invention concerne un procédé de préparation de matériaux composites comportant des inclusions de carbone vitreux de dimensions contrôlées, réparties d'une manière sensiblement uniforme et régulière au sein d'une matrice inorganique dense ou poreuse, de préférence métallique.

On rappelle que le carbone vitreux est une variété artificielle du carbone qui est obtenue par pyrolyse, dans des conditions rigoureusement contrôlées, de polymères réticulés obtenus par polycondensation de phénols et d'aldéhydes. Le carbone obtenu lors de cette pyrolyse est appelé carbone vitreux en raison de son aspect, de sa dureté, de sa fragilité (comparable à celle d'une porcelaine), et de son imperméabilité aux gaz qui sont comparables à ceux du verre.

Pour obtenir ce carbone vitreux, la pyrolyse du polymère réticulé est conduite de telle sorte que le réseau tridimensionnel du polymère soit conservé pendant l'opération et confère au produit final cette structure particulière.

Le carbone vitreux présente des propriétés intéressantes pour diverses applications. En effet, compte tenu de sa structure particulière qui délimite des micropores ne communiquant pas entre eux et ne débouchant pas sur la surface du matériau, celui-ci présente une faible densité de l'ordre de 1,45 alors que celle du graphite est de 2,2. Par ailleurs, ses propriétés mécaniques sont voisines de celles du graphite pyrolithique ou du pyrocarbone ; et ses propriétés thermiques : une conductibilité thermique de l'ordre de 0,04 à 0,08 Joule/cm$^{-1} \cdot$ °C$^{-1} \cdot$ s$^{-1}$ et un coefficient de dilatation de l'ordre de 3 à 5 $\cdot$ 10$^6 \cdot$ °C$^{-1}$ à 100 °C et de 20 $\cdot$ 10$^{-6} \cdot$ °C$^{-1}$ à 1 500 °C, lui confèrent une remarquable résistance aux chocs thermiques. De plus, le carbone vitreux présente une résistance à l'oxydation supérieure à celle des autres variétés de carbone et de graphite en particulier une bonne résistance à l'oxydation par l'oxygène, la vapeur d'eau ou le gaz carbonique.

Aussi, on peut améliorer les propriétés mécaniques, thermiques, et/ou chimiques de certains matériaux inorganiques en leur ajoutant du carbone vitreux. Depuis quelques années, on a tenté de réaliser des matériaux composites comportant soit des inclusions de carbone vitreux, soit un revêtement de carbone vitreux. Cependant, les procédés utilisés jusqu'à présent n'ont pas permis d'obtenir un matériau composite comportant une matrice inorganique dans laquelle sont dispersées en proportion voulue des inclusions de carbone vitreux de dimensions contrôlées.

La présente invention a précisément pour objet un procédé de préparation d'un matériau composite comportant des inclusions de matériaux carbonés, en particulier de carbone vitreux, qui permet d'obtenir une dispersion uniforme et régulière de ces inclusions au sein d'une matrice inorganique poreuse ou compacte tout en contrôlant la dimension maximale de ces inclusions ainsi que la teneur en matériau carboné du produit obtenu.

A cet effet, le procédé selon l'invention, de préparation d'un matériau composite comportant une matrice inorganique dans laquelle sont réparties des inclusions de matériau carboné, se caractérise en ce qu'il comprend les étapes suivantes :

a) mélanger une poudre inorganique frittable avec une résine liquide susceptible d'être transformée en carbone vitreux par traitement thermique,

b) soumettre le mélange de résine et de poudre inorganique à un premier traitement thermique effectué dans des conditions telles qu'on obtient un durcissement de la résine par réticulation ou polycondensation, et

c) soumettre le produit durci ainsi obtenu à un deuxième traitement thermique pour transformer la résine en carbone vitreux et former ainsi lesdites inclusions de carbone vitreux.

Le fait de partir d'un mélange comprenant la résine à l'état liquide et une poudre de matériau constituant la matrice, et de réaliser « in situ » les inclusions de carbone vitreux dans la masse du produit par traitement thermique du mélange permet non seulement d'obtenir une répartition homogène de ces inclusions mais également de contrôler d'une part, les dimensions en agissant sur la granulométrie de la poudre de départ et, d'autre part, la teneur en carbone vitreux du produit obtenu en agissant sur la teneur en résine du mélange.

En effet, on a trouvé que les dimensions des inclusions augmentaient avec la granulométrie de la poudre inorganique. Par ailleurs, on a vérifié que la teneur en carbone vitreux du produit augmente avec la teneur en résine du mélange de départ.

En revanche, on a trouvé que les dimensions des inclusions ne dépendaient que très peu de la teneur en résine du mélange de départ. Ainsi, le procédé de l'invention permet de réaliser efficacement et économiquement le contrôle de la composition du produit indépendamment du contrôle de la taille des inclusions.

2

Par ailleurs, en mélangeant une résine à l'état liquide avec une poudre inorganique de granulométrie contrôlée, on peut obtenir une pâte homogène présentant une porosité ouverte, ce qui permet lors des deux traitements thermiques d'assurer l'évacuation des gaz libérés et de prévenir ainsi la formation d'une porosité importante et irrégulière et d'éviter également l'apparition de fissures.

Avantageusement, avant de réaliser le premier traitement thermique, on soumet le mélange de résine et de poudre inorganique à une opération de mise en forme par compression à froid, afin d'obtenir une préforme.

Cette opération de compression peut être réalisée par pressage, filage, laminage ou extrusion de façon à mettre la pâte sous la forme de feuilles, de cylindres, etc..., mais elle est effectuée, de préférence, dans des conditions telles que la pâte ne devient pas compacte pour autoriser l'évacuation des gaz lors des traitements thermiques ultérieurs.

Toutefois, on peut réaliser les traitements thermiques sur une pâte compacte. Mais dans ce cas, il est nécessaire de soumettre le matériau obtenu à une opération complémentaire de densification éventuellement après broyage, pour éliminer la porosité.

Selon l'invention, la poudre inorganique utilisée est une poudre frittable, c'est-à-dire d'un matériau inorganique susceptible d'être mis en forme et consolidé par les techniques de la métallurgie des poudres ; par ailleurs, ce matériau inorganique est choisi de façon telle qu'il ne soit pas fusible aux températures utilisées pour les premier et deuxième traitements thermiques. A titre de matériaux inorganiques susceptibles d'être utilisés, on peut citer les métaux tels que le cuivre et le nickel, les alliages, les céramiques telles que les oxydes, les carbures et les nitrures, par exemple le nitrure de bore, et les cermets. On peut aussi utiliser des poudres revêtues ou des mélanges de poudres de matériaux différents, par exemple, de matériaux susceptibles de réagir entre eux dans les conditions de traitement pour former une phase liquide.

La granulométrie de la poudre inorganique utilisée est choisie en fonction de la dimension d'inclusions que l'on veut obtenir. Généralement, on utilise une poudre dont la granulométrie moyenne est comprise entre 0 et 600 μm.

Selon l'invention, la résine utilisée est avantageusement une résine liquide, comportant des radicaux phénoliques (tels le phénol, le résorcinol, le naphtalène diol, etc...) et des radicaux dérivés d'aldéhydes (tels le formol, le glyoxal, le furfuraldéhyde, etc...).

De préférence, la résine liquide est une résine phénol formaldéhyde.

Avantageusement, le mélange de résine et de poudre inorganique contient au plus 20 % en poids de résine.

Selon l'invention, le premier traitement thermique est avantageusement réalisé à une température au plus égale à 350 °C pendant une durée de 1 à 3 heures. Au cours de ce premier traitement thermique, on obtient la polycondensation de la résine, ce qui conduit à la formation d'un polymère réticulé solide et à l'obtention d'un produit durci. Grâce à la porosité de la pâte de départ, les gaz libérés lors de cette réaction peuvent être évacués, ce qui permet d'éviter l'apparition d'une porosité importante et/ou la formation de fissures dans le produit durci. Ce produit durci est ensuite soumis à un deuxième traitement thermique pour transformer le polymère solide en carbone vitreux. Ce deuxième traitement doit être effectué dans des conditions rigoureusement contrôlées de façon à conserver le réseau tridimensionnel du polymère solide réticulé.

Ainsi, lors de la réalisation de ce traitement thermique, il est nécessaire de contrôler notamment la vitesse de montée en température, ainsi que la température et la durée du traitement. Avantageusement, on réalise ce deuxième traitement sous vide ou sous atmosphère neutre à une température de 600 à 1 100 °C pendant une durée de 30 à 50 heures en réalisant de préférence la montée en température de la pièce de façon telle que la libération des gaz résultant de la pyrolyse soit progressive.

Au cours de ce traitement, la poudre inorganique est partiellement frittée et l'on obtient ainsi, à la suite de ce traitement, une matrice poreuse contenant une dispersion homogène d'inclusions de carbone vitreux.

Lorsqu'on veut obtenir un matériau composite dans lequel la matrice est dense, on soumet le produit obtenu à la suite de ce deuxième traitement thermique à une densification qui peut être réalisée, éventuellement après broyage ou déformation, par les techniques classiques de la métallurgie des poudres et/ou par infiltration au moyen d'un composé fondu ou gazeux.

Cette opération de densification peut être réalisée par exemple par frittage sous charge, par compression isostatique à chaud, par filage à chaud de poudre contenue dans une gaine étanche ou par extrusion à chaud.

Selon une variante de mise en œuvre du procédé de l'invention, adaptée à la fabrication d'un matériau composite comportant des inclusions de matériaux carbonés constitués au moins en partie par du graphite, on part d'un mélange de poudre inorganique et de résine liquide à laquelle on a ajouté de la poudre fine de graphite ou de nitrure de bore, puis on réalise le premier et le deuxième traitements thermiques comme précédemment éventuellement après avoir soumis le mélange à une opération de mise en forme par compression, et on soumet le matériau composite comportant des inclusions de carbone vitreux à un traitement complémentaire de graphitisation en le portant à une température au plus égale à 2 200 °C. Dans ces conditions, les inclusions de carbone vitreux se transforment au moins partiellement en graphite. En effet, ceci est obtenu grâce à l'adjonction de poudre de graphite ou de nitrure de bore à la résine liquide car le carbone vitreux ne peut se graphiter qu'avec des additifs ou des agents mécaniques extérieurs.

Dans cette variante, la poudre inorganique utilisée est une poudre réfractaire non fusible dans les conditions de température du traitement thermique de graphitisation.

Selon une seconde variante de mise en œuvre du procédé de l'invention, particulièrement adaptée à la fabrication de matériaux composites dont les inclusions sont en partie constituées de carbure, on soumet le matériau composite comportant des inclusions de carbone vitreux obtenu à la suite du second traitement thermique, à un traitement complémentaire afin de faire réagir au moins en partie le carbone des inclusions avec la matrice et former ainsi des inclusions de carbure dispersées dans cette matrice. Cette réaction peut être réalisée, par exemple, au cours d'une opération de densification par compression isostatique à chaud, ce qui permet de plus de réduire la porosité éventuellement formée lors de la réaction.

La présente invention a également pour objet un matériau composite obtenu par ce procédé, utilisable notamment pour la réalisation de contacts électriques.

Pour cette utilisation, le matériau composite se caractérise en ce qu'il comprend une matrice inorganique métallique, de préférence en cuivre, dans laquelle sont dispersées des inclusions de carbone vitreux. Dans ce cas, les inclusions de carbone vitreux représentent au plus 8 % en poids du matériau composite et elles ont de préférence des dimensions inférieures à 500 μm.

Un tel matériau peut être utilisé en particulier pour réaliser des paires de contacts électriques symétriques destinées à remplacer les paires de contact utilisées actuellement telles que les contacts argent-nickel et argent-cuivre, dans les disjoncteurs électriques basse et moyenne tensions. En effet, les matériaux composites de l'invention contenant environ 3 % en poids de carbone vitreux présentent des propriétés satisfaisantes pour cette application : leur résistance de contact ainsi que leur résistance à l'érosion restent acceptables au cours de cycles de 5 000 coupures d'un courant nominal de 100 ampères ou après coupures d'un courant de court-circuit de 1 500 à 13 000 ampères ; dans le cas de fermeture avec rebond la résistance à la soudure est également satisfaisante même en cas d'établissement d'un courant de court-circuit ; cependant, au cours d'un cycle de 1 200 fermetures-ouvertures sans courant, la résistance de contact peut atteindre une valeur trop élevée si la taille des inclusions de carbone dépasse 500 microns (la résistance de contact croît pendant les 100 premières manœuvres environ puis atteint un palier).

Aussi, on utilise de préférence des matériaux composites à dispersion fine, c'est-à-dire des matériaux dans lesquels la taille des inclusions de carbone vitreux ne dépasse pas 500 microns.

En revanche, lorsqu'on utilise des contacts composites cuivre-graphite dans les mêmes conditions, il se produit une augmentation inacceptable de la résistance de contact au cours d'un cycle de 5 000 coupures d'un courant nominal de 100 ampères, cette différence de comportement est probablement liée à la plus faible réactivité du carbone vitreux vis-à-vis de l'oxygène.

D'autres avantages et caractéristiques de l'invention apparaîtront mieux à la lecture des exemples suivants, donnés bien entendu à titre illustratif et non limitatif, en référence au dessin annexé sur lequel :

la figure 1 est un diagramme illustrant l'évolution de la température en fonction du temps lors du deuxième traitement thermique mis en œuvre pour la préparation de matériaux composites selon l'invention, et

les figures 2 et 3 sont des micrographies effectuées respectivement sur une coupe transversale et sur une coupe longitudinale du matériau filé obtenu dans l'exemple 3.

Ces exemples se rapportent à la préparation de matériaux composites comportant une matrice de cuivre et des inclusions de carbone vitreux, de tels matériaux pouvant être utilisés en particulier comme contacts électriques dans les disjoncteurs basse et moyenne tensions.

Dans ces exemples, on fait seulement varier les teneurs en résine du mélange de départ et la granulométrie de la poudre de cuivre utilisée. Dans chaque exemple, le matériau composite est fabriqué de la façon suivante.

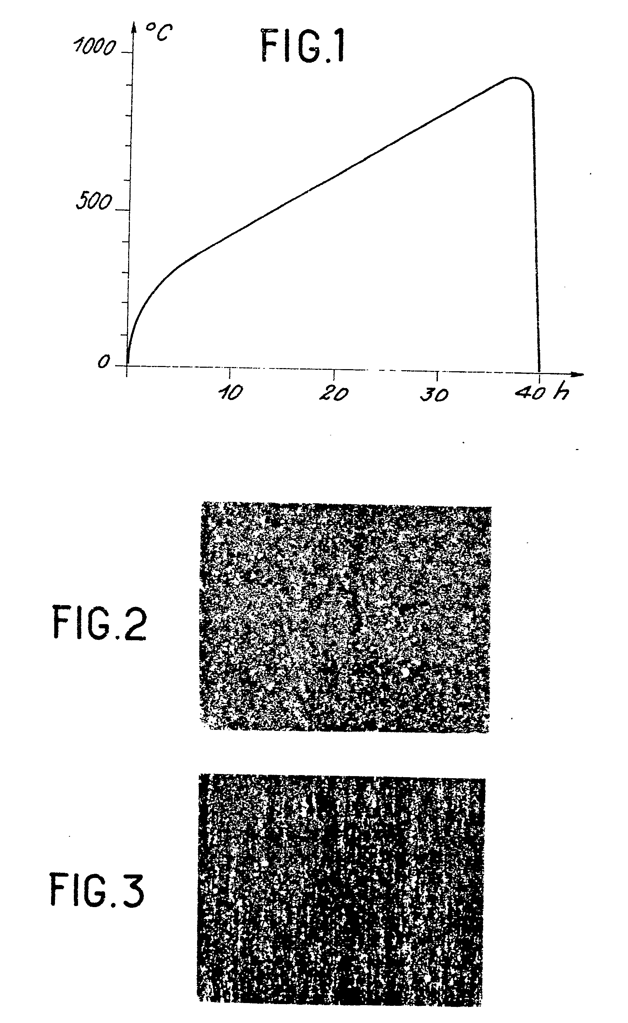

On prépare une pâte par mélange mécanique de poudre de cuivre et de résine phénol-formaldéhyde, puis on pastille la pâte en galettes de 70 g environ et on soumet les galettes obtenues à un premier traitement thermique réalisé à 120 °C à l'air pendant 2 heures et à un deuxième traitement thermique effectué sous vide dans les conditions de durée et de température représentés par le cycle de la figure 1 qui est un diagramme représentant l'évolution de la température (°C) en fonction du temps (en heures) pendant ce traitement thermique ; on conditionne ensuite sous vide les galettes poreuses de cuivre-carbone vitreux ainsi obtenues, dans des gaines de filage en cuivre et on réalise le filage sous gaine dans les conditions suivantes :

— température de préchauffage : 860 °C,
— rapport de filage : ≃ 20,
— pression de filage : 604 bars,
— vitesse de sortie : 50 m/min.,
— diamètre des pots de filage : 43,5 mm, sauf dans le cas de l'exemple 5 où il est de 91,5 mm,
— diamètre de filière : 10 mm, sauf dans le cas de l'exemple 5 où il est de 22 mm.

4

On obtient ainsi différents matériaux composites présentant les propriétés données dans le tableau qui suit. Dans ce tableau, on a également indiqué pour chaque exemple la granulométrie de la poudre de cuivre et le rapport en poids masse de résine/masse de poudre de cuivre utilisés.

(Voir Tableau page suivante)

Tableau

| Exem-ple | Mélange de départ | | Propriétés des matériaux filés | | |
| --- | --- | --- | --- | --- | --- |
| | Granulométrie de la poudre de cuivre | masse de résine / masse de poudre (% en poids) | Composition (% en pds de carbone vitreux) | Densité du composite | Taille des inclusions de carbone vitreux |
| 1 | 80/520 µm | 7,5 | 3,3 | 7,2 | ≤ 200 µm |
| 2 | | 12,5 | 5,5 | 6,5 | |
| 3 | | 5,0 | 2,2 | 7,7 | |
| 4 | | 7,5 | 3,3 | 7,3 | |
| 5 | 20/130 µm | 7,5 | 3,4 | 7,1 | ≤ 50 µm |
| 6 | | 10,0 | 4,8 | 6,7 | |
| 7 | | 12,5 | 6,1 | 6,4 | |
| 8 | 0/40 µm | 7,5 | 3,3 | 7,2 | ≤ 15 µm |
| 9 | | 12,5 | 6,1 | 6,3 | |

Au vu de ces résultats, on constate que :

— la teneur en carbone vitreux des matériaux composites, déterminée par analyse chimique et exprimée en pourcentage par rapport au poids total du matériau composite, est proportionnelle à la masse de résine présente dans le mélange de départ,

— les dimensions des inclusions augmentent avec la granulométrie de la poudre de cuivre en étant pratiquement indépendantes de la teneur globale en carbone ; et

— la densité des matériaux composites diminue rapidement en fonction de leur teneur en carbone vitreux.

En comparant ces résultats expérimentaux à des courbes théoriques, on peut estimer que la densité du carbone vitreux inclus dans les matériaux composites est de $1,15 \pm 0,6$.

Ainsi, ces résultats confirment qu'on peut régler la composition du matériau et la dimension des inclusions indépendamment l'une de l'autre en agissant respectivement sur la teneur en résine et la granulométrie.

En se reportant maintenant aux figures 2 et 3 qui sont des micrographies effectuées respectivement sur une coupe transversale et sur une coupe longitudinale du matériau composite obtenu dans l'exemple 3, on constate que le matériau obtenu présente une excellente homogénéité.

Par ailleurs, la micrographie effectuée sur la coupe métallographique longitudinale montre une tendance à l'alignement des inclusions de carbone dans la direction de filage ainsi que des veines ou fibres de cuivre pur. On a pu constater que la largeur de ces veines croît avec la granulométrie de la poudre de départ et qu'elle décroît légèrement quand la teneur en carbone vitreux augmente.

## Revendications

1. Procédé de préparation d'un matériau composite comportant une matrice inorganique dans laquelle sont réparties des inclusions de matériau carboné, caractérisé en ce qu'il comprend les étapes suivantes :

a) mélanger une poudre inorganique frittable avec une résine liquide susceptible d'être transformée en carbone vitreux par traitement thermique,

b) soumettre le mélange de résine et de poudre inorganique à un premier traitement thermique effectué dans des conditions telles qu'on obtient un durcissement de la résine par réticulation ou polycondensation, et

c) soumettre le produit durci ainsi obtenu à un deuxième traitement thermique pour transformer la résine en carbone vitreux et former ainsi lesdites inclusions de carbone vitreux.

2. Procédé selon la revendication 1, caractérisé en ce qu'avant de réaliser le premier traitement thermique, on soumet le mélange de résine et de poudre à une mise en forme par compression à froid pour obtenir une préforme.

3. Procédé selon l'une quelconque des revendications 1 et 2, caractérisé en ce que la poudre inorganique est une poudre de métal ou d'alliage.

4. Procédé selon la revendication 3, caractérisé en ce que la poudre inorganique est une poudre de cuivre.

5. Procédé selon l'une quelconque des revendications 1 à 4, caractérisé en ce que la résine est une résine comportant des radicaux phénoliques et des radicaux dérivés d'aldéhydes.

6. Procédé selon la revendication 5, caractérisé en ce que la résine est une résine phénol formaldéhyde.

7. Procédé selon l'une quelconque des revendications 1 à 6, caractérisé en ce que le mélange de résine et de poudre inorganique contient au plus 20 % en poids de résine.

8. Procédé selon l'une quelconque des revendications 1 à 7, caractérisé en ce que le premier traitement thermique est réalisé à une température au plus égale à 350 °C pendant une durée de 1 à 3 heures.

9. Procédé selon l'une quelconque des revendications 1 à 8, caractérisé en ce que le deuxième traitement thermique est effectué sous vide ou sous atmosphère neutre à une température de 600 à 1 100 °C pendant une durée de 30 à 50 heures.

10. Procédé selon l'une quelconque des revendications 1 à 9, caractérisé en ce que l'on soumet à une densification le matériau composite comportant les inclusions de carbone vitreux obtenues à la suite du deuxième traitement thermique.

11. Procédé selon la revendication 10, caractérisé en ce que l'on réalise cette densification par filage à chaud et/ou par compression isostatique à chaud.

12. Procédé selon l'une quelconque des revendications 1 à 9, caractérisé en ce que la résine liquide utilisée dans l'étape a) contient de la poudre de graphite et/ou de la poudre de nitrure de bore, et en ce que l'on soumet le matériau composite comportant des inclusions de carbone vitreux obtenu à la suite du deuxième traitement thermique à un traitement thermique complémentaire de graphitisation effectué à une température au plus égale à 2 200 °C pour transformer au moins en partie les inclusions de carbone vitreux en graphite, la poudre inorganique étant une poudre réfractaire non fusible dans les conditions de

7

température du traitement thermique de graphitisation.

13. Procédé selon l'une quelconque des revendications 1 à 9, caractérisé en ce que l'on soumet le matériau composite obtenu à la suite du second traitement thermique à un traitement complémentaire afin de faire réagir au moins en partie le carbone des inclusions avec la matrice inorganique et former ainsi des inclusions de carbure dispersées dans cette matrice.

14. Matériau composite obtenu par le procédé suivant l'une quelconque des revendications 1 à 11, caractérisé en ce qu'il comprend une matrice de cuivre dans laquelle sont dispersées de façon uniforme et homogène des inclusions de carbone vitreux, la teneur en carbone vitreux dudit matériau composite étant au plus de 8 % en poids.

15. Matériau selon la revendication 14, caractérisé en ce que lesdites inclusions ont des dimensions inférieures à 500 μm.

16. Utilisation du matériau composite selon l'une quelconque des revendications 14 et 15 pour la réalisation de contacts électriques.

## Claims

1. Process for the preparation of a composite material comprising an inorganic matrix, in which are distributed inclusions of carbonaceous material, characterized in that it comprises the following stages :

a) mixing a sinterable inorganic powder with a liquid resin capable of being transformed into vitreous carbon by heat treatment,

b) subjecting the mixture of resin and inorganic powder to a first heat treatment carried out under conditions such as to bring about hardening of the resin by crosslinking or polycondensation, and

c) subjecting the thereby-obtained hardened product to a second heat treatment to convert the resin into vitreous carbon and thereby to form the said inclusions of vitreous carbon.

2. Process according to Claim 1, characterized in that before carrying out the first heat treatment, the mixture of resin and powder is moulded by cold compression to form a green blank.

3. Process according to either of Claims 1 and 2, characterized in that the inorganic powder is a metal or alloy powder.

4. Process according to Claim 3 characterized in that the inorganic powder is copper powder.

5. Process according to any one of Claims 1 to 4, characterized in that the resin is a resin having phenol groups and groups derived from aldehydes.

6. Process according to Claim 5, characterized in that the resin is a phenol-formaldehyde resin.

7. Process according to any one of Claims 1 to 6, characterized in that the mixture of resin and inorganic powder contains at most 20 % by weight of resin.

8. Process according to any one of Claims 1 to 7, characterized in that the first heat treatment is carried out at a temperature of at most 350 °C for a period of 1 to 3 hours.

9. Process according to any one of Claims 1 to 8, characterized in that the second heat treatment is carried out under vacuum, or in an inert atmosphere, at a temperature of 600 to 1 100 °C for a period of 30 to 50 hours.

10. Process according to any one of Claims 1 to 9, characterized in that the composite material comprising inclusions of vitreous carbon, obtained at the end of the second heat treatment, is subjected to a densification treatment.

11. Process according to Claim 10, characterized in that the densification is achieved by spinning when hot, and/or by isostatic compression when hot.

12. Process according to any one of Claims 1 to 9, characterized in that the liquid resin employed in step (a) contains graphite powder and/or boron nitride powder, and in that the composite material comprising vitreous carbon inclusions obtained at the end of the second heat treatment is subjected to a further heat treatment for graphitisation, carried out at a temperature of at most 2 200 °C to convert at least a part of the vitreous carbon inclusions into graphite, the inorganic powder being a refractory powder which is non-fusible under the temperature conditions of the graphitising heat treatment.

13. Process according to any one of Claims 1 to 9, characterized in that the composite material obtained at the end of the second heat treatment is subjected to a further treatment whereby to cause at least a part of the carbon in the inclusions to react with the inorganic matrix and thereby to form inclusions of carbide dispersed in said matrix.

14. Composite material obtained by a process according to any one of Claims 1 to 11, characterized in that it comprises a matrix of copper, within which are uniformly and homogeneously dispersed inclusions of vitreous carbon, the vitreous carbon content of said composite material being at most 8 % by weight.

15. Material according to Claim 14, characterized in that said inclusions have dimensions less than 500 μm.

16. Use of a composite material according to either of Claims 14 and 15 for the production of electrical contacts.

**Patentansprüche**

1. Verfahren zur Herstellung eines Verbundmaterials aus einem anorganischen Grundmaterial, in dem Einschlüsse aus einem Kohlenstoffmaterial verteilt sind, dadurch gekennzeichnet, daß es die folgenden Stufen umfaßt :

a) Mischen eines sinterbaren anorganischen Pulvers mit einem flüssigen Harz, das durch thermische Behandlung in glasartigen Kohlenstoff umgewandelt werden kann,

b) Unterwerfen der Mischung aus dem Harz und dem anorganischen Pulver einer ersten thermischen Behandlung, die unter solchen Bedingungen durchgeführt wird, daß man eine Härtung des Harzes durch Vernetzung oder Polykondensation erhält, und

c) Unterwerfen des auf diese Weise erhaltenen gehärteten Produkts einer zweiten thermischen Behandlung, um das Harz in glasartigen Kohlenstoff umzuwandeln und auf diese Weise die glasartigen Kohlenstoffeinschlüsse zu bilden.

2. Verfahren nach Anspruch 1, dadurch gekennzeichnet, daß man vor Durchführung der ersten thermischen Behandlung die Mischung aus dem Harz und dem Pulver zur Herstellung einer Vorform einer Kaltdruckverformung unterwirft.

3. Verfahren nach einem der Ansprüche 1 und 2, dadurch gekennzeichnet, daß das anorganische Pulver ein Metall- oder Legierungspulver ist.

4. Verfahren nach Anspruch 3, dadurch gekennzeichnet, daß das anorganische Pulver ein Kupferpulver ist.

5. Verfahren nach einem der Ansprüche 1 bis 4, dadurch gekennzeichnet, daß das Harz ein Harz ist, das Phenolreste und Reste aufweist, die von Aldehyden abgeleitet sind.

6. Verfahren nach Anspruch 5, dadurch gekennzeichnet, daß das Harz ein Phenol-Formaldehyd-Harz ist.

7. Verfahren nach einem der Ansprüche 1 bis 6, dadurch gekennzeichnet, daß die Mischung aus dem Harz und dem anorganischen Pulver höchstens 20 Gew.-% Harz enthält.

8. Verfahren nach einem der Ansprüche 1 bis 7, dadurch gekennzeichnet, daß die erste thermische Behandlung bei einer Temperatur von höchstens 350 °C für eine Zeitdauer von 1 bis 3 Stunden durchgeführt wird.

9. Verfahren nach einem der Ansprüche 1 bis 8, dadurch gekennzeichnet, daß die zweite thermische Behandlung unter Vakuum oder in einer inerten Atmosphäre bei einer Temperatur von 600 bis 1 100 °C für einen Zeitraum von 30 bis 50 Stunden durchgeführt wird.

10. Verfahren nach einem der Ansprüche 1 bis 9, dadurch gekennzeichnet, daß man das Verbundmaterial, das die als Folge der zweiten thermischen Behandlung erhaltenen glasartigen Kohlenstoffeinschlüsse enthält, verdichtet.

11. Verfahren nach Anspruch 10, dadurch gekennzeichnet, daß man diese Verdichtung durch Schmelzspinnen und/oder isostatische Warmkompression durchführt.

12. Verfahren nach einem der Ansprüche 1 bis 9, dadurch gekennzeichnet, daß das in der Stufe (a) verwendete flüssige Harz Graphitpulver und/oder Bornitridpulver enthält und daß man das die als Folge der zweiten thermischen Behandlung erhaltenen glasartigen Kohlenstoffeinschlüsse aufweisende Verbundmaterial einer ergänzenden thermischen Graphitierungsbehandlung unterwirft, die bei einer Temperatur von höchstens 2 200 °C durchgeführt wird, um die glasartigen Kohlenstoffeinschlüsse mindestens zum Teil in Graphit umzuwandeln, wobei es sich bei dem anorganischen Pulver um ein feuerfestes Pulver handelt, das unter den Temperaturbedingungen der thermischen Graphitierungsbehandlung nicht schmelzbar ist.

13. Verfahren nach einem der Ansprüche 1 bis 9, dadurch gekennzeichnet, daß man das als Folge der zweiten thermischen Behandlung erhaltene Verbundmaterial einer ergänzenden Behandlung unterwirft, um mindestens einen Teil des Kohlenstoffs der Einschlüsse mit dem anorganischen Grundmaterial reagieren zu lassen und auf diese Weise Carbideinschlüsse zu bilden, die in diesem Grundmaterial verteilt sind.

14. Verbundmaterial, wie es nach dem Verfahren nach einem der Ansprüche 1 bis 11 erhalten wird, dadurch gekennzeichnet, daß es umfaßt ein Kupfer-Grundmaterial, in dem glasartige Kohlenstoffeinschlüsse gleichmäßig und homogen verteilt sind, wobei der Gehalt des Verbundmaterials an glasartigem Kohlenstoff höchstens 8 Gew.-% beträgt.

15. Material nach Anspruch 14, dadurch gekennzeichnet, daß die Einschlüsse Dimensionen von weniger als 500 µm haben.

16. Verwendung des Verbundmaterials nach einem der Ansprüche 14 und 15 zur Herstellung von elektrischen Kontakten.

FIG.1

FIG.2

FIG.3

1